# EUROPÄISCHE PATENTANMELDUNG

(11) **EP 4 611 255 A1**
(43) Veröffentlichungstag der Anmeldung: **03.09.2025**
(21) Anmeldenummer: 24160836.3
(22) Anmeldetag: 01.03.2024
(51) Int. Cl.: H02S 20/23, F24S 25/613, F24S 25/70

(54) **DACHHAKEN**

(71) Anmelder: Alumero Systematic Solutions GmbH, 5164 Seeham (AT); Mounting Solutions PV Systems GmbH, 6710 Nenzing (AT)
(72) Erfinder: Auer, Markus, 6780 Schruns (AT)
(74) Vertreter: Rothkopf, Ferdinand

(57) **Zusammenfassung**

Die Erfindung betrifft einen Dachhaken, der ein Fußteil zum Verbinden mit einer Dachkonstruktion und ein Hakenteil aufweist, das mit dem Fußteil mittels einer Koppelverbindung wahlweise verbindbar ist. Dabei ist die Koppelverbindung mit einem Klemmelement gestaltet, das an dem Fußteil ortsfest gehaltert und gegen das Hakenteil gedrängt ist.

## Beschreibung

### Hintergrund der Erfindung

Die Erfindung betrifft einen Dachhaken mit einem Fußteil zum Verbinden mit einer Dachkonstruktion und einem Hakenteil, das mit dem Fußteil mittels einer Koppelverbindung wahlweise verbindbar ist.

Dachhaken der gattungsgemäßen Art werden genutzt, um damit insbesondere Stützkonstruktionen für Photovoltaikmodule auf einer Dachkonstruktion wind- und wetterfest anzubringen. Der Dachhaken überwindet dabei die Distanz zwischen der Dachkonstruktion und der Stützkonstruktion, innerhalb der sich eine Schindeleindeckung für die zugehörige Dachfläche befindet. Es sind geteilt ausgebildete Dachhaken bekannt, die aus einem mit der Dachkonstruktion zu verbindenden Fußteil und einem mit der Stützkonstruktion zu verbindenden Hakenteil gebildet sind. Das Hakenteil ist dabei mit dem Fußteil separat zu koppeln. Für diese Kopplung sind diverse lösbare Verbindungen, wie etwa eine herkömmliche Verschraubung, üblich. Problematisch ist dabei, dass der zugehörige Montageaufwand bei bekannten Dachhaken vergleichsweise hoch ist.

### Zugrundeliegende Aufgabe

Der Erfindung liegt die Aufgabe zugrunde, einen Dachhaken zu schaffen, der kostengünstig herstellbar ist, einen geringen Montageaufwand mit sich bringt, zugleich aber auch besonders leicht verstellbar ist und dennoch hohe Haltekräfte bereitstellt.

### Erfindungsgemäße Lösung

Diese Aufgabe ist erfindungsgemäß mit einem Dachhaken gelöst, der ein Fußteil zum Verbinden mit einer Dachkonstruktion und ein Hakenteil aufweist, das mit dem Fußteil mittels einer Koppelverbindung wahlweise, insbesondere stufenweise, verbindbar ist. Erfindungsgemäß ist die Koppelverbindung mit einem Klemmelement gestaltet, das an dem Fußteil ortsfest gehaltert und gegen das Hakenteil gedrängt ist. Das Fußteil und das Klemmelement sind dabei vorzugsweise mit je einem Profilabschnitt von Profilleisten gestaltet, die insbesondere mittels Strangpressen aus einer Aluminiumlegierung hergestellt sind.

### Vorteilhafte Weiterbildungen der Erfindung

Bei einer vorteilhaften Weiterbildung der Erfindung sind das Klemmelement und das Hakenteil mittels einer ersten Verrastung insbesondere formschlüssig miteinander gekoppelt. Die formschlüssige, erste Verrastung führt zu einer besonders lagegenauen Positionierung des Klemmelements am Hakenteil.

Vorzugsweise ist ferner die erste Verrastung mit einer Mehrzahl ineinander greifender Rastrillen gestaltet. Die Rastrillen führen zu einer besonderen Stützwirkung bezüglich einer möglichen Torsion des Hakenteils.

Das Hakenteil ist vorteilhaft vom Klemmelement gegen ein Stützelement gedrängt, wobei das Stützelement mit dem Fußteil ortsfest verbunden, insbesondere einteilig ortsfest verbunden ist. Das Stützelement bildet so ein Gegenlager für das Klemmelement.

Das Fußteil ist gemäß einer vorteilhaften Weiterbildung mit zwei Winkelschenkeln gestaltet, von denen ein erster Winkelschenkel zum Verbinden mit der Dachkonstruktion vorgesehen ist und der zweite Winkelschenkel von dem ersten Winkelschenkel in einem rechten Winkel abstehend gestaltet ist.

Ferner sind das Fußteil und das Hakenteil in vorteilhafter Weise mittels einer zweiten Verrastung formschlüssig miteinander gekoppelt. Die formschlüssige, zweite Verrastung führt zu einer besonders lagegenauen Positionierung des Hakenteils am Fußteil.

Die zweite Verrastung ist vorzugsweise mit einer Mehrzahl ineinander greifender Rastrillen gestaltet. Die Rastrillen führen ebenfalls zu einer weiter verbesserten, besonderen Stützwirkung bezüglich einer möglichen Torsion des Hakenteils.

Das Klemmelement ist bevorzugt mittels einer Schraubverbindung an dem Fußteil ortsfest gehaltert. Eine solche Schraubverbindung kann besonders kostengünstig und einfach hergestellt werden.

An dem Fußteil ist ferner bevorzugt eine sich insbesondere in Richtung des zweiten Winkelschenkels erstreckende Längsnut ausgebildet, in der die Schraubverbindung rückgehalten ist. Die Schraubverbindung kann von Montagepersonal so besonders schnell montiert werden.

Schließlich ist an dem Hakenteil noch vorteilhaft eine bezogen auf das Fußteil im Wesentlichen waagrecht oder im Wesentlichen senkrecht ausgerichtete Anlagefläche zum Koppeln mit einer Stützkonstruktion mindestens eines Photovoltaikmoduls ausgebildet. Die Anlagefläche bildet die eigentliche Abstützung für die mittels des Dachhakens dabei abzustützenden Photovoltaikmodule.

### Kurzbeschreibung der Zeichnungen

Nachfolgend wird ein Ausführungsbeispiel einer erfindungsgemäßen Lösung anhand der beigefügten schematischen Zeichnungen näher erläutert. Es zeigt:
- Fig. 1: eine perspektivische Ansicht eines ersten Ausführungsbeispiels der erfindungsgemäßen Lösung,
- Fig. 2: die Seitenansicht II gemäß Fig. 1,
- Fig. 3: die Seitenansicht gemäß Fig. 2 eines zweiten Ausführungsbeispiels der erfindungsgemäßen Lösung .

### Detaillierte Beschreibung des Ausführungsbeispiels

In den Fig. sind zwei Ausführungsbeispiele eines mehrteiligen, zusammengesetzten Dachhakens 10 dargestellt, der je aus einem Fußteil 12 und einem Hakenteil 14 gebildet ist. Der Dachhaken 10 ist mit seinem Fußteil 12 auf einer Dachkonstruktion 16 abzustützen und insbesondere ortsfest anzubringen. Er stützt derart angeordnet mit seinem Hakenteil 14 eine Stützkonstruktion 18 mindestens eines (nicht dargestellten) Photovoltaikmoduls.

Das Fußteil 12 ist aus Profilabschnitt eines Aluminium-Strangpress-Winkelprofils mit einem ersten Winkelschenkel 20 und einem davon im Wesentlichen senkrecht nach oben abstehenden zweiten Winkelschenkel 22 gebildet.

An dem ersten Winkelschenkel 20 ist beabstandet von dem zweiten Winkelschenkel 22 ein Klemmelement 24 ortsfest abgestützt, das gegen das Hakenteil 14 angelehnt ist und dieses seinerseits gegen den zweiten Winkelschenkel 22 drängt.

Die Kontaktfläche zwischen dem Klemmelement 24 und dem Hakenteil 14 ist als eine erste Verrastung 26 mit einer Mehrzahl erster Rastrillen 28 gestaltet. Die ersten Rastrillen 28 befinden sich sowohl in dem Klemmelement 24 als auch dem Hakenteil 14 und bildet so ineinandergreifend eine formschlüssige Verbindung.

Auch die Kontaktfläche zwischen dem Hakenteil 14 und dem zweiten Winkelschenkel 22, der als ein Stützelement für das Hakenteil 14 wirkt, ist als eine zweite Verrastung 30 mit einer Mehrzahl zweiter Rastrillen 32 gestaltet. Die zweiten Rastrillen 32 befinden sich sowohl in dem Hakenteil 14 als auch dem zweiten Winkelschenkel 22 und bildet so ebenfalls ineinandergreifend eine formschlüssige Verbindung.

An dem ersten Winkelschenkel 20 ist etwas beabstandet von dem zweiten Winkelschenkel 22 eine Längsnut 34 ausgebildet, die sich parallel zum zweiten Winkelschenkel 22 erstreckt und derart hinterschnitten ist, dass darin eine Schraubverbindung 36 zurückzuhalten ist. Die Schraubverbindung 36 ist mit einer Schraube 38 gebildet, deren Schraubenkopf 40 in die Längsnut 34 eingeführt und dort rückgehalten ist. An den Schraubenkopf 40 schließt ein Schraubenschaft 42 an, der durch das Klemmelement 24 hindurch ragt und dann außenseitig mit einer das Klemmelement 24 zur Längsnut 34 hin drängenden Schraubenmutter 44 versehen ist.

Das derart am zweiten Winkelschenkel 22 geklemmte Hakenteil 14 ist dabei mit einem ersten Hakenabschnitt 46 zwischen dem Klemmelement 24 und dem zweiten Winkelschenkel 22 eingespannt. An den ersten Hakenabschnitt 46 schließt ein zweiter Hakenabschnitt 48 an, der mit dem ersten Hakenabschnitt 46 einen Winkel von zwischen 90° und 120°, insbesondere zwischen 100° und 110° einschließt. Auf den zweiten Hakenabschnitt 48 folgt dann schließlich ein dritter Hakenabschnitt 50, der zu einer Anlagefläche 50 führt, an der die Stützkonstruktion 18 wie oben erwähnt mittels einer weiteren Schraubverbindung 54 ortsfest gehalten ist.

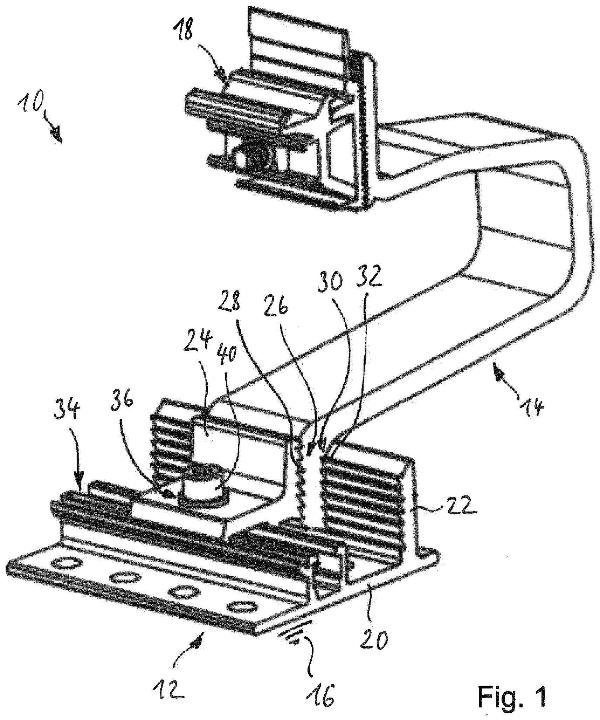

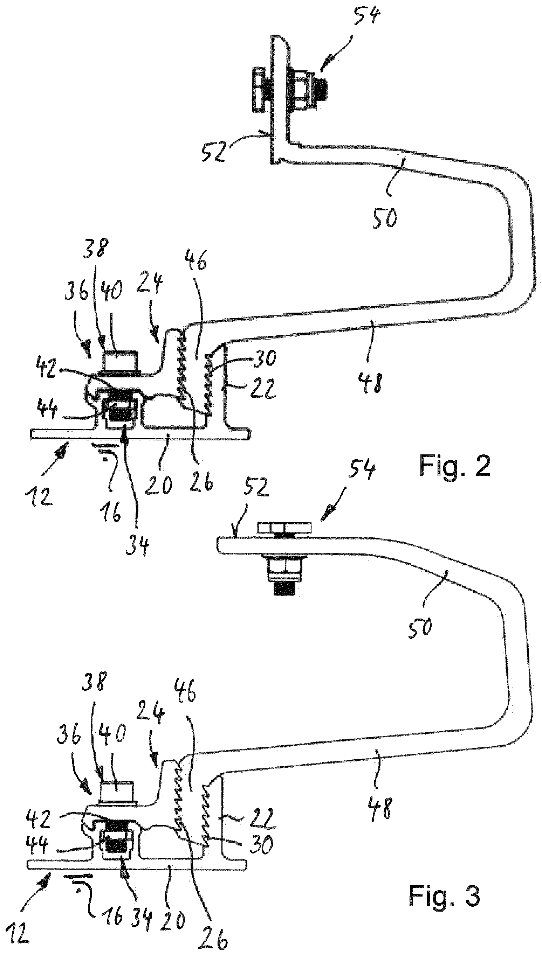

Bei dem Ausführungsbeispiel gemäß den Fig. 1 und 2 ist die Anlagefläche 52 dabei bezogen auf die Figuren senkrecht ausgerichtet, wohingegen die Anlagefläche 52 bei dem Ausführungsbeispiel gemäß Fig. 3 bezogen auf die Figur waagrecht ausgerichtet ist.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Dachhaken
- 12: Fußteil
- 14: Hakenteil
- 16: Dachkonstruktion
- 18: Stützkonstruktion eines Photovoltaikmoduls
- 20: erster Winkelschenkel
- 22: zweiter Winkelschenkel (Stützelement)
- 24: Klemmelement
- 26: erste Verrastung
- 28: erste Rastrille
- 30: zweite Verrastung
- 32: zweite Rastrille
- 34: Längsnut
- 36: Schraubverbindung
- 38: Schraube
- 40: Schraubenkopf
- 42: Schraubenschaft
- 44: Schraubenmutter
- 46: erster Hakenteilabschnitt
- 48: zweiter Hakenteilabschnitt
- 50: dritter Hakenteilabschnitt
- 52: Anlagefläche für Stützkonstruktion
- 54: weitere Schraubverbindung

## Patentansprüche

1. Dachhaken (10) mit einem Fußteil (12) zum Verbinden mit einer Dachkonstruktion (16) und einem Hakenteil (14), das mit dem Fußteil (12) mittels einer Koppelverbindung wahlweise verbindbar ist,
**dadurch gekennzeichnet, dass** die Koppelverbindung mit einem Klemmelement (24) gestaltet ist, das an dem Fußteil (12) ortsfest gehaltert und gegen das Hakenteil (14) gedrängt ist.

2. Dachhaken nach Anspruch 1,
**dadurch gekennzeichnet, dass** das Klemmelement (24) und das Hakenteil (14) mittels einer ersten Verrastung (26) miteinander gekoppelt sind.

3. Dachhaken nach Anspruch 2,
**dadurch gekennzeichnet, dass** die erste Verrastung (26) mit einer Mehrzahl ineinander greifender, erster Rastrillen (28) gestaltet ist.

4. Dachhaken nach einem der Ansprüche 1 bis 3,
**dadurch gekennzeichnet, dass** das Hakenteil (14) vom Klemmelement (24) gegen ein Stützelement gedrängt ist, wobei das Stützelement mit dem Fußteil (12) ortsfest verbunden, insbesondere einteilig ortsfest verbunden ist.

5. Dachhaken nach Anspruch 4,
**dadurch gekennzeichnet, dass** das Fußteil (12) mit zwei Winkelschenkeln (20, 22) gestaltet ist, von denen ein erster Winkelschenkel (20) zum Verbinden mit der Dachkonstruktion (16) vorgesehen ist und der zweite Winkelschenkel (22) von dem ersten Winkelschenkel (20) in einem rechten Winkel abstehend gestaltet ist.

6. Dachhaken nach Anspruch 4 oder 5,
**dadurch gekennzeichnet, dass** das Fußteil (12) und das Hakenteil (14) mittels einer zweiten Verrastung (30) formschlüssig miteinander gekoppelt sind.

7. Dachhaken nach Anspruch 6,
**dadurch gekennzeichnet, dass** die zweite Verrastung (30) mit einer Mehrzahl ineinander greifender, zweiter Rastrillen (32) gestaltet ist.

8. Dachhaken nach einem der Ansprüche 1 bis 7,
**dadurch gekennzeichnet, dass** das Klemmelement (24) mittels einer Schraubverbindung (36) an dem Fußteil (12) ortsfest gehaltert ist.

9. Dachhaken nach einem der Ansprüche 1 bis 8,
**dadurch gekennzeichnet, dass** an dem Fußteil (12) eine sich insbesondere in Richtung des zweiten Winkelschenkels (22) erstreckende Längsnut (34) ausgebildet ist, in der insbesondere die Schraubverbindung (36) rückgehalten ist.

10. Dachhaken nach einem der Ansprüche 1 bis 9,
**dadurch gekennzeichnet, dass** an dem Hakenteil (14) eine bezogen auf das Fußteil (12) im Wesentlichen waagrecht oder im Wesentlichen senkrecht ausgerichtete Anlagefläche (52) zum Koppeln mit einer Stützkonstruktion (18) mindestens eines Photovoltaikmoduls ausgebildet ist.
